# EUROPÄISCHE PATENTSCHRIFT

(11) **EP 1 814 700 B1**
(45) Veröffentlichungstag und Bekanntmachung des Hinweises auf die Patenterteilung: **21.05.2008**
(21) Anmeldenummer: 05798799.2
(22) Anmeldetag: 07.11.2005
(51) Int. Cl.: B25J 15/06

(54) **VORRICHTUNG ZUM ANKOPPELN EINER ZUSATZEINRICHTUNG**
DEVICE FOR COUPLING AN ATTACHMENT
DISPOSITIF POUR ACCOUPLER UN DISPOSITIF COMPLEMENTAIRE

(30) Priorität: 08.11.2004 CH 18342004
(43) Veröffentlichungstag der Anmeldung: 08.08.2007
(73) Patentinhaber: CTC Analytics AG, 4222 Zwingen (CH)
(72) Erfinder: CUENI, Hansjörg, CH-6362 Stansstad (CH); SCHERRER, Heiner, CH-4227 Büsserach (CH)
(74) Vertreter: Braun, André jr.
(86) Internationale Anmeldenummer: PCT/CH2005/000653
(87) Internationale Veröffentlichungsnummer: WO 2006/047904

(56) Entgegenhaltungen:
- DE-A1- 19 938 114
- US-A- 5 428 331

## Beschreibung

Die Erfindung betrifft eine Vorrichtung zum temporären Ankoppeln eines Instruments oder Werkzeugs an einen Transportmechanismus, wie beispielsweise einen XYZ-Roboter einer Analyseneinrichtung.

Zu den typischerweise in Analysengeräten zur Durchführung von Analysenreihen vorhandenen Einrichtungen gehört eine Transporteinrichtung, welche Pipetten, Spritzen, Messsonden etc., die für den Zweck dieser Beschreibung unter dem Begriff "Instrumente" zusammengefasst werden, zu einer Vielzahl von Positionen führt. Diese Positionen befinden sich beispielsweise bei einer Vielzahl von Küvetten zwecks Entnahme oder Einbringung von Proben, zur Messung einer erfolgten Reaktion und dergl. Die Behälter oder Küvetten sind dabei in der Regel in einer XY-Matrix angeordnet. Die Instrumente befinden sich in der Regel in einem in Z-Richtung bewegten Kopf. Solche Transporteinrichtungen werden häufig als XYZ-Roboter bezeichnet.

Mit den zunehmenden Anforderungen und Möglichkeiten der Analytik wächst auch die Notwendigkeit grösserer Flexibilität hinsichtlich der im Z-Kopf vorhandenen Instrumente bzw. deren Funktionen. Dies ist bis zu einem gewissen Grad lösbar, indem im Kopf mehrere Instrumente angeordnet werden, die nach Bedarf eingesetzt werden. Mit dieser Lösung erreicht man aber trotz hohem Aufwand keine ausreichende Flexibilität.

Es ist auch bereits vorgeschlagen worden, nach Bedarf auswechselbare Instrumente an den Kopf anzukoppeln. Aus der US-A-2004 022 680 ist dementsprechend eine Vorrichtung zum temporären Ankoppeln eines Instruments oder Werkzeugs an einen Transportmechanismus bekannt, die einen an einem in Z-Richtung bewegten Teil des Transportmechanismus angeordneten Permanentmagneten als Kopplungsring, sowie einen auf der Oberseite des jeweils anzukoppelnden Instruments als Kopplungsplatte ausgebildeten Permanentmagneten aufweist.

Es besteht daher nach wie vor das Bedürfnis nach einer Lösung, die mit einfachen Mitteln zu sehr hoher Flexibilität führt. Dies liegt der vorliegenden Erfindung als Aufgabe zugrunde.

Erfindungsgemäss wird dies gelöst durch eine Vorrichtung gemäß Anspruch 1.

Im folgenden wird anhand der beiliegenden Zeichnungen ein bevorzugtes Ausführungsbeispiel der Erfindung beschrieben. Es zeigen:
- Fig. 1: eine perspektivische Darstellung eines XYZ-Roboters
- Fig. 2: eine vergrösserte Darstellung eines Halters des für ein Zusatzinstrument
- Fig. 3: eine Frontansicht des Z-Kopfes der ohne Gehäuse
- Fig. 4: eine vergrösserte Unteransicht des am Z-Kopf angeordneten Kopplungsrings.

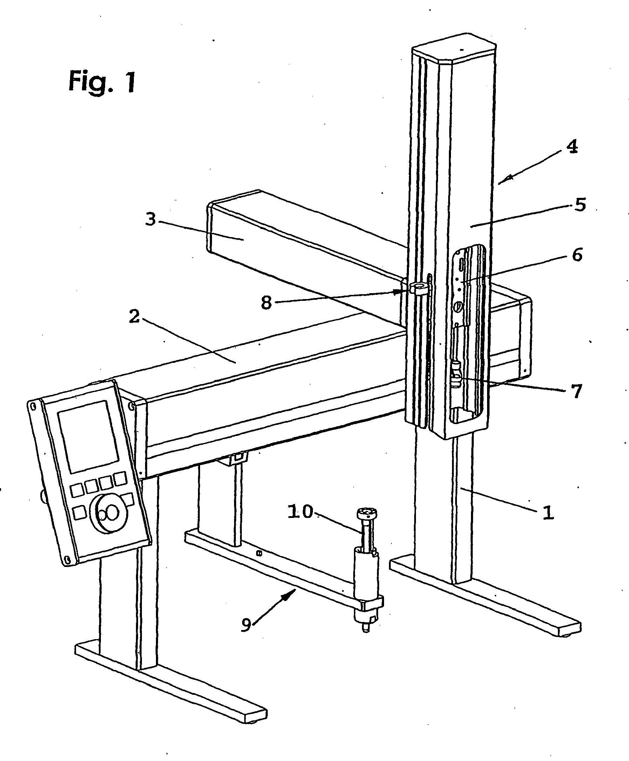

Der in Fig. 1 in perspektivischer Darstellung gezeigte XYZ-Roboter entspricht weitgehend einem handelsüblichen Produkt und besteht aus einer mit Stützen 1 versehenen Brücke 2, einem Ausleger 3 und einem Kopf 4. Die Brücke definiert die X-Achse des Roboters. Mittels an sich bekannter Antriebsvorrichtungen läuft der Ausleger 3 in der X-Richtung hin und her und ausserdem in Y-Richtung vor und zurück. Der an der Stirnseite des Auslegers 3 angeordnete Kopf 4 weist im Inneren eines Gehäuses 5 einen vertikal, d.h. in Z-Richtung, auf und ab fahrenden Schlitten 6 auf, an dessen unterem Ende beim vorliegenden Beispiel eine Probenabgabeeinrichtung 7 für das als MALDI-Spotting bekannte Testverfahren angeordnet ist.

Alternativ kann der Kopf selbstverständlich in bekannter Weise je nach Einsatz mit einer Pipette, einer Spritze, einem optischen Sensor, einem Rührer etc., d.h. mit Instrumenten unterschiedlichster Funktion versehen sein.

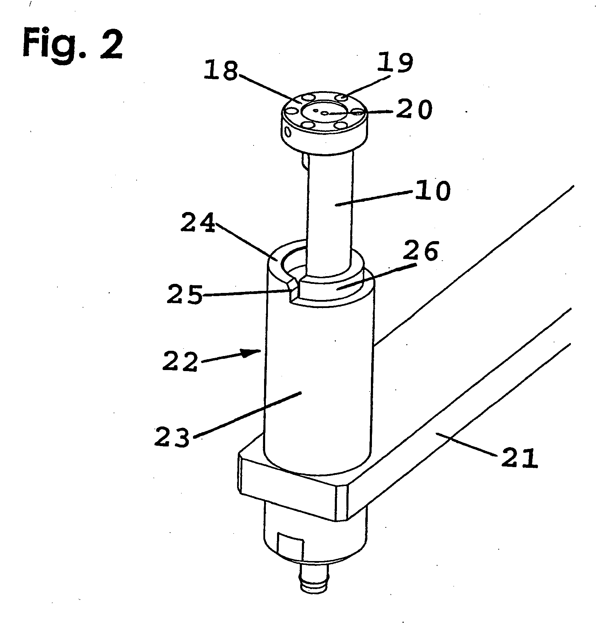

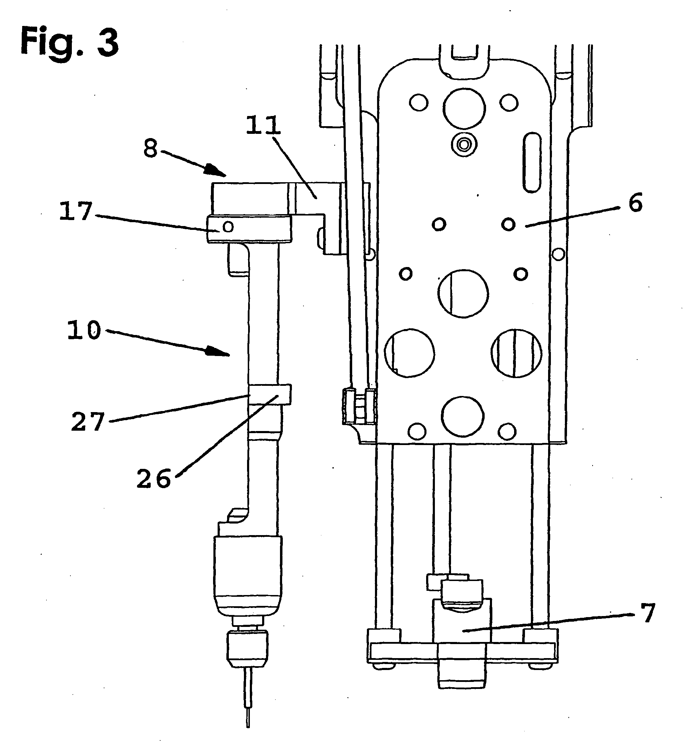

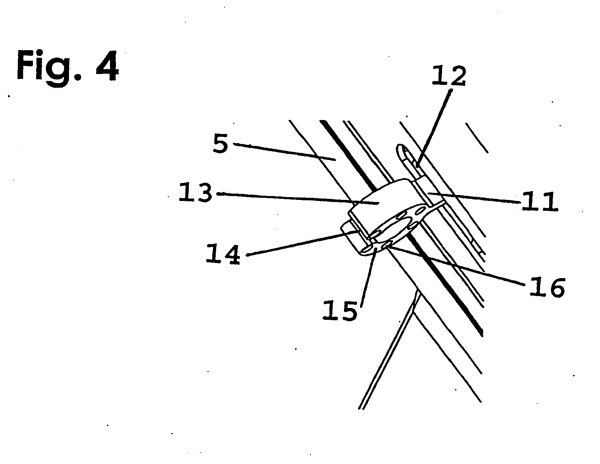

Im Unterschied zum bekannten Produkt weist der vorliegende XYZ-Roboter eine Kopplungsvorrichtung 8 und einen Halter 9 für ein zusätzliches Instrument 10 auf. Kopplungsvorrichtung 8 und Halter 9 für ein zusätzliches Instrument 10 sind in den Fig. 2-4 vergrössert gezeigt. Die Kopplungsvorrichtung besteht aus einem Arm 11, der mit seinem einen Ende fest mit dem Schlitten 6 verbunden ist und sich durch einen Schlitz 12 im Gehäuse 5 nach aussen erstreckt. Ausserhalb des Gehäuses ist am anderen Ende des Arms 11 ein teilweise offener Kopplungsring 13 mit einer Öffnung 14 an seinem vorderen Ende ausgebildet. An der Unterseite 15 des Kopplungsrings sind sechs Permanentmagnete 16 in gleichmässigen Winkelabständen angeordnet. Es sind dies zylindrische Magnete, die in entsprechenden Vertiefungen eingesetzt sind und deren Stirnflächen mit der Unterseite des Kopplungsrings bündig sind. Die Magneten sind so eingesetzt, dass ihre Polung an der Unterseite des Kopplungsrings abwechselt.

Das zusätzliche Instrument 10 ist im vorliegenden Fall ein Gerät zur Ablage von einzelnen Tropfen eines Reagens auf eine MALDI-Platte. Alternativ kann es sich beim zusätzlichen Instrument je nach Einsatz um eine Pipette, eine Spritze, eine Sonde etc., oder auch um ein mechanisches Werkzeug handeln. Unabhängig von seiner Ausbildung und seiner Funktion besitzt das Instrument an seinem oberen Ende eine Kopplungsplatte 17, in deren Oberfläche 18 sechs Permanentmagnete 19 angeordnet sind. Ähnlich wie beim Kopplungsring 13 handelt es sich um zylindrische Magnete, die bündig mit der Oberfläche 18 in entsprechende Vertiefungen eingesetzt sind und zwar ebenfalls mit abwechselnder Polung. Die Kopplungsplatte kann mit einer zentralen Bohrung 20 zur Durchführung einer Zuleitung oder dergl. versehen sein und hat dann ebenfalls die Form eines Ringes.

Die Anzahl von sechs Magneten bei der beschriebenen Einrichtung ist lediglich eine von mehreren Möglichkeiten. Es können auch weniger oder mehr Magnete vorgesehen werden, die auch gleich gepolt sein können. Wenn jedoch zur Erzielung der Selbstzentrierung abwechselnde Polung vorgesehen ist, so ist eine gerade Zahl von Magneten vorteilhaft.

Die Anordnung der Magnete ist so gewählt, dass in der gewünschten Position des Instruments jeweils Anziehung zwischen den Magneten des Kopplungsrings und denen der Kopplungsplatte herrscht. Jede Abweichung der Winkelposition oder der lateralen Position des Instruments gegenüber dem Kopf würde zu einer Verringerung der Anziehung einander gegenüberliegender Magnete und einer Verstärkung der Abstossung zwischen benachbarten Magneten führen, so dass sich dadurch ein selbstzentrierender Effekt ergibt. Die Präzision dieser Selbstzentrierung liegt in der Grössenordnung von 0,1 mm.

Wie aus der vergrösserten Darstellung in Fig. 2 ersichtlich besteht der Halter 9 aus einem im wesentlichen L-förmigen, an der Unterseite der Brücke angeordneten Träger 21 und einem auf diesem angeordneten Köcher 22, in welchem das Instrument 10 während seines Nichtgebrauchs geparkt wird. Der Köcher besteht aus einem Rohr 23 dessen oberer Rand 24 mit einem Absatz 25 versehen ist. Das Instrument 10 besitzt auf der dem Rand 24 entsprechenden Höhe einen teilweise umlaufenden Flansch 26, dessen Stirnenden Anschlagflächen 27 bilden, die am Absatz 25 anliegen, wenn sich das Instrument im Köcher befindet. Absatz 25 und Anschlag 27 dienen der Festlegung der präzisen Winkelposition des Instruments während es Nichtgebrauchs.

Das An- und Abkoppeln des Instruments wird von der Software des Roboters gesteuert, die zu diesem Zweck entsprechend ergänzt ist. Zum Ankoppeln fährt der Kopf so zum Instrument, dass sich der Kopplungsring koaxial über der Koppelplatte befindet. In dieser XY-Position wird der Schlitten mit dem Koppelring abgesenkt. Sobald der Kopplungsring in die Nähe der Koppelplatte kommt wird das Instrument durch die magnetische Anziehung angehoben und durch die Selbstzentrierung in präziser Position gehalten. Nun können die mit dem Instrument vorgesehenen zusätzlichen Funktionen durchgeführt werden. Die XYZ-Steuerung berücksichtigt zu diesem Zweck den Unterschied der Koordinaten zwischen der Probenabgabe und der Pipettenspitze.

Wenn das Instrument nicht mehr benötigt wird, erfolgt die Abkopplung. Zu diesem Zweck fährt der Kopf so zum Köcher, dass sich das Instrument koaxial über diesem befindet. Durch Absenken des Schlittens wird das Instrument vollständig in seine Parkposition gebracht, in welcher seine Winkelposition festgelegt ist. Daraufhin fährt der Kopf seitlich, d.h. in X-Richtung weg, um den Kopplungsring von der Koppelplatte zu trennen.

Wenn für eine Testreihe mehrere verschiedene Instrumente zum Einsatz kommen sollen, können auf dem Halter mehrere Köcher nebeneinander angeordnet werden, aus denen nach Bedarf das jeweils benötigte Instrument an den Kopf angekoppelt wird und wohin es nach Gebrauch wieder zurückgebracht wird.

Neben der beschriebenen Anwendung ist eine Kopplung dieser Art für eine Vielzahl von Anwendungen geeignet, bei denen zwar Präzision der Position aber nur geringe mechanische Verbindungskraft erforderlich ist und das An- und Abkoppeln sehr einfach sein soll.

## Patentansprüche

1. Vorrichtung zum temporären Ankoppeln eines Instruments oder Werkzeugs an einen Transportmechanismus, die einen seitlich an einem in Z-Richtung bewegten Teil (4) des Transport mechanismus angeordneten Kopplungsring (13) mit mehreren auf seiner Unterseite (15) angeordneten Permanentmagneten (16), eine auf der Oberseite des jeweils anzukoppelnden Instruments (10) befindliche Kopplungsplatte (17) mit in gleicher Verteilung wie am Kopplungsring angeordneten entsprechend gegenpoligen Permanentmagneten (19), sowie einen feststehenden Halter (9) zur Aufnahme des Instruments bei Nichtgebrauch aufweist.

2. Vorrichtung nach Anspruch 1, **dadurch gekennzeichnet, dass** die Permanentmagnete auf der Unterseite des Kopplungsrings und auf der Kopplungsplatte konzentrisch und winkelversetzt angeordnet sind.

3. Vorrichtung nach Anspruch 2, **dadurch gekennzeichnet, dass** die Permanentmagnete abwechselnd gepolt sind.

4. Vorrichtung nach Anspruch 1, **dadurch gekennzeichnet, dass** der Halter einen Köcher zum Parkieren des Instruments bei Nichtgebrauch aufweist.

5. Vorrichtung nach Anspruch 4, **dadurch gekennzeichnet, dass** der Köcher einen oberen Rand mit Mitteln zum definierten Positionieren des Instruments aufweist.

6. Vorrichtung nach Anspruch 5, **dadurch gekennzeichnet, dass** die Mittel zum Positionieren aus einem Absatz am oberen Rand des Köchers und aus einem teilweise umlaufenden Flansch am Instrument bestehen.

## Claims

1. Device for temporarily coupling an instrument or tool to a transport mechanism, which device has a coupling ring (13) arranged laterally on a part (4) of the transport mechanism which is moved in the Z-direction and comprising a plurality of permanent magnets (16) arranged on its underside(15), a coupling plate (17) which is present on the surface of the instrument (10) to be coupled in each case and has permanent magnets (19)arranged in the same distribution as on the coupling ring and with correspondingly opposite polarity, and a fixed holder (9) for receiving the instrument when not in use.

2. Device according to Claim 1, **characterized in that** the permanent magnets on the underside of the coupling ring and on the coupling plate are arranged concentrically and with angular offsets.

3. Device according to Claim 2, **characterized in that** the permanent magnets have alternate polarity.

4. Device according to Claim 1, **characterized in that** the holder has a tubular case for storing the instrument when not in use.

5. Device according to Claim 4, **characterized in that** the tubular case has an upper edge with means for the defined positioning of the instrument.

6. Device according to Claim 5, **characterized in that** the means for positioning consist of a step at the upper edge of the tubular case and of a flange running partly around the instrument.

## Revendications

1. Dispositif pour accoupler temporairement un instrument ou un outil à un mécanisme de transport, comprenant une bague de couplage (13), disposée latéralement sur une partie (4) du mécanisme de transport qui se déplace dans la direction Z, avec plusieurs aimants permanents (16), disposés sur la face inférieure (15), une plaque de couplage (17), qui se situe sur la face supérieure de l'instrument (10) correspondant à coupler, avec des aimants permanents (19) de pôle opposé disposés dans la même distribution que sur la bague de couplage, et un support (9) fixe pour la réception de l'instrument lors d'une non-utilisation.

2. Dispositif selon la revendication 1, **caractérisé en ce que** les aimants permanents sont disposés sur la face inférieure de la bague de couplage et sur la plaque de couplage de manière concentrique et angulairement décalés.

3. Dispositif selon la revendication 2, **caractérisé en ce que** les aimants permanents sont polarisés en alternance.

4. Dispositif selon la revendication 1, **caractérisé en ce que** le support comprend un carquois pour parquer les instruments lors d'une non-utilisation.

5. Dispositif selon la revendication 4, **caractérisé en ce que** le carquois comprend un bord supérieur avec des moyens pour le positionnement défini des instruments.

6. Dispositif selon la revendication 5, **caractérisé en ce que** les moyens pour le positionnement se composent d'un épaulement sur le bord supérieur du carquois et d'un rebord partiellement circulaire sur l'instrument.
